**Europäisches Patentamt**

**European Patent Office**

**Office européen des brevets**

(19)

(11) Veröffentlichungsnummer : **0 123 189
B1**

(12) # EUROPÄISCHE PATENTSCHRIFT

(45) Veröffentlichungstag der Patentschrift :
09.09.87

(51) Int. Cl.⁴ : **G 01 F 23/28**

(21) Anmeldenummer : **84103893.8**

(22) Anmeldetag : **07.04.84**

(54) **Einrichtung zur Meldung des Füllstandes an dem Ort eines Sensors.**

(30) Priorität : **25.04.83 DE 3314872**

(43) Veröffentlichungstag der Anmeldung :
**31.10.84 Patentblatt 84/44**

(45) Bekanntmachung des Hinweises auf die Patenterteilung : **09.09.87 Patentblatt 87/37**

(84) Benannte Vertragsstaaten :
**FR GB SE**

(56) Entgegenhaltungen :
**DE-A- 2 631 061
DE-A- 3 005 851
DE-A- 3 044 353
DE-B- 2 512 060
GB-A- 1 473 840**

(73) Patentinhaber : **VDO Adolf Schindling AG
Gräfstrasse 103
D-6000 Frankfurt/Main (DE)**

(72) Erfinder : **Ziegler, Klaus
Spiessgasse 26
D-6146 Alsbach-Hähnlein (DE)**

(74) Vertreter : **Könekamp, Herbert, Dipl.-Ing.
Sodener Strasse 9
D-6231 Schwalbach (DE)**

## Beschreibung

Die Erfindung betrifft eine Einrichtung zur Meldung des Füllstandes an dem Ort eines Sensors nach dem Oberbegriff des Anspruchs 1.

In derartigen bekannten Einrichtungen ist der piezoelektrische Schwinger Bestandteil eines Oszillators, der somit den Schwinger mit einer Schwingung beaufschlagt. Je nachdem, ob der Sensor, in dem sich der Schwinger an einem Boden oder einer Membrane angebracht befindet, von dem Füllgut bedeckt ist oder aber nicht, ändert sich die Impedanz des piezoelektrischen Schwingers. Mit dieser Impedanzänderung einher geht eine Änderung der Oszillatorfrequenz. Vorzugsweise ist die Oszillatorfrequenz auf die Eigenfrequenz der Membran oder des Bodens abgestimmt, d. h., wenn der Sensor nicht eintaucht. Beim Eintauchen des Sensors wird der Oszillator bedämpft und die Schwingung kann ganz abreißen. Um mit einer elektronischen Schaltungsanordnung zu unterscheiden, ob der Sensor ein- oder ausgetaucht ist, kann die Dämpfung und/oder die Frequenzverschiebung und/oder der Abriß dieser Resonanzschwingung erfaßt werden, um ein Signal zur Meldung und/oder Steuerung zu erzeugen. Die Resonanzfrequenz, mit der der piezoelektrische Schwinger schwingt, und die Impedanz ist aber nicht nur von dem durch den Füllstand bestimmten Zustand des Sensors abhängig, sondern auch von der Temperatur des gemessenen Mediums bzw. der Umgebungstemperatur des Sensors, obwohl die voranstehend charakterisierten Einrichtungen durch die Umgebungstemperatur möglichst nicht beeinflußt sein sollten. Die Verschiebung der Resonanzfrequenz in Abhängigkeit von der Umgebungstemperatur stört besonders, wenn in einer relativ meßempfindlichen Einrichtung zu den Mitteln zur Auswertung, ob der Schwinger mit einer definierten Resonanzfrequenz schwingt, ein Bandpaßfilter vorgesehen ist. Das Bandpaßfilter ist dabei auf die Frequenz einer am Rande fest eingespannten Membrane abgestimmt, welche mit dem piezoelektrischen Schwinger fest verbunden ist. Die Frequenz des piezoelektrischen Schwingers, eines Piezoschwingkristalles, ist weiterhin auf die Eigenfrequenz der Membran abgestimmt (DE-AS 16 73 972). Wenn das Gut, dessen Füllstand gemessen werden soll, die Membran erreicht, tritt eine Frequenzverschiebung ein, und es wird ein Meldesignal ausgelöst, da die verschobene Frequenz das Bandpaßfilter nicht passiert. Eine ähnliche Frequenzverschiebung kann aber schon auftreten, wenn sich zwar nicht der Füllstand, aber die Temperatur des Füllguts ändert.

Bei einer anderen bekannten Einrichtung (DE-AS 25 12 060) wird mit einer Ansprechschaltung lediglich erfaßt, ob ein Oszillator, in dessen Schaltkreis der piezoelektrische Schwinger angeordnet ist, schwingt, weil das Füllgut den Sensor nicht erreicht hat oder aber bei Erreichen des Sensors die Schwingung des Oszillators abgerissen ist. Bis zu einem Schwingungsabriß sind aber größere Füllstandsänderungen erforderlich als in dem Falle, in dem bereits eine kleine Frequenzabweichung ausgewertet wird. Das letztgenannte Meßprinzip ist insofern ungenauer. Hinzu kommt, daß ein Schwingungsabriß auch durch andere Parameter, beispielsweise Verringerung der Betriebsspannung, beeinflußt werden kann. Den schädlichen Einfluß von Umgebungstemperaturänderungen hat man mit der letztgenannten Einrichtung nur insoweit zu eliminieren versucht, als es zu einer Fehlfunktion des Sensors kommt, wenn beispielsweise Motoröl als zu messendes Gut in den Gelzustand übergegangen ist. Durch das Gel kann der Anschein erweckt werden, daß der Flüssigkeitsstand über dem Sensor liegt. Um einer solchen Fehlfunktion vorzubeugen, ist in die Oszillatorschaltung ein temperaturabhängiges zusätzliches Impedanzelement eingegliedert. Dadurch soll eine Anzeige des Unterschreitens oder Überschreitens eines vorgegebenen Füllstandes nur dann möglich sein, wenn die Umgebungstemperatur einen gegebenen Temperaturwert überschritten hat. In anderen Fällen ist also die Einrichtung unwirksam, bzw. zeigt auch dann Unterschreiten des vorgegebenen Füllstandes an, wenn dieser tatsächlich in Ordnung ist.

Bei dieser Einrichtung ist es auch bekannt festzustellen, ob die Amplitude der Resonanzfrequenz oberhalb eines bestimmten Wertes oder unterhalb dieses Wertes liegt. Dieses wird als Indikator zum Feststellen des Füllstandes herangezogen. Dabei besteht die Gefahr, daß das schwingende System sich auf eine andere Resonanzfrequenz einschwingt, die nahe der eigentlich abzufragenden Resonanzfrequenz liegt, aber bei der das schwingende System nicht mehr auf die Zustände eingetaucht bzw. ausgetaucht anspricht. Somit kann dann kein entsprechendes Signal abgegeben werden.

Aus der DE-A- 30 44 353 ist eine Vorrichtung zur Feststellung des Erreichens eines bestimmten Füllstandes in einem Behälter bekannt, die eine in den Behälter ragende Sonde, einen HF-Generator zum Zuführen vom HF-Energie zu der Sonde und eine Auswertungsschaltung, die auf die Amplitude des HF-Signals an der Sonde anspricht aufweist, wobei die Sonde mit einem zum Innern des Behälters ragenden Oberflächenwellenresonator versehen ist.

Bei dieser Vorrichtung wird die Amplitude des Meßsignals einer Sonde ausgewertet. Als Meßgröße wird die Resonanz mit Oberflächenwellen herangezogen, wobei die Länge des Oberflächenwellenresonators gleich einem Viertel der Wellenlänge der sich auf ihm bildenden Oberflächenwellen ist.

In der DE-A- 30 05 851 wird ein Verfahren zur Flüssigkeitsstandskontrolle mittels eines Ultraschallsenders und eines mit Abstand zu diesem angeordneten Ultraschallempfängers beschrieben, wobei Sender und Empfänger je nach Höhe des Flüssigkeitsstandes in die Flüssigkeit eintauchen oder nicht. Die gesendete Frequenz des
Ultraschallsenders wird innerhalb eines vorgesehenen Frequenzbereiches gewobbelt, wobei aus
den auftretenden Resonanzen des Ultraschallempfängers ein Niveausignal gebildet wird.

Es wird ein Frequenzbereich durchlaufen, der
mehrere, wenn nicht gar zahlreiche Resonanzfrequenzen beinhaltet. Die hierbei auftretenden Resonanzen sind nicht nur abhängig vom Sender,
sondern ebenso vom Medium, vom Ultraschallempfänger und hängen außerdem sehr
stark von der geometrischen Anordnung von
Sender und Empfänger ab. Bei diesem Verfahren
wird ausschließlich aus der Summe der Impulshöhen bei sämtlichen Resonanzfrequenzen eine
Aussage über den Füllstand abgeleitet.

Zu der vorliegenden Erfindung gehört die Aufgabe unter Vermeidung der Nachteile der bekannten Einrichtungen, diese so auszugestalten, daß
eine sichere Diskriminierung des Füllstandes unabhängig von der Umgebungstemperatur und
anderen Parametern bei hoher Meßauflösung erreicht wird.

Diese Aufgabe wird durch die in dem kennzeichnenden Teil des Anspruchs 1 angegebene
Erfindung gelöst.

Mit dieser weiterentwickelten Einrichtung wird
also der piezoelektrische Schwinger mit einer
unabhängig von dem Schwinger erzeugten elektrischen Schwingung eines Frequenzbereichs beaufschlagt, in dem eine ausgewählte Resonanzfrequenz des piezoelektrischen Schwingers ist,
wenn sich dieser in einem vorbestimmten Zustand
befindet. Es wird also praktisch der piezoelektrische Schwinger nach der ausgewählten Frequenz
abgefragt, bei der das Detektieren der Resonanz
den vorbestimmten Zustand signalisieren würde.
Dadurch, daß das schwingende System so angeregt wird, daß es ausschließlich im Bereich der
bestimmten ausgewählten Resonanzfrequenz
schwingt, ist es nicht möglich, daß es auf eine
andere in der Nähe liegende Resonanzfrequenz
wechselt und dort weiterschwingt.

Dadurch ist gleichzeitig eine Selbstüberwachung der Einrichtung gegeben, da bei
schwingendem System grundsätzlich die Einrichtung in Ordnung sein muß.

Besonders vorteilhaft ist daß das Mittel zur
Feststellung des Schwingens des piezoelektrischen Schwingers mit der Resonanzfrequenz ein
Phasendetektor ist, der den Phasenunterschied
zwischen Strom und Spannung in dem piezoelektrischen Schwinger erfaßt. Damit wird eine sichere Unterscheidung erreicht, da nur im Resonanzfall, der zwischen der Serienresonanz und der
Parallelresonanz liegt, die Phasenverschiebung
negativ ist. Es tritt also beim Erreichen der Resonanzfrequenz eine Vorzeichenumkehr ein. Negative Phasenverschiebung besteht bei Nacheilung
des Stromes nach der Spannung.

Das Mittel, durch das der Schwinger in
Schwingung versetzbar ist, kann ein den
Schwinger beaufschlagender Wobbelgenerator
sein, der auf einen Wobbelbereich eingestellt ist,
in dem nur die sich in einem vorgegebenen
Umgebungstemperaturbereich des Sensors und
in dem einen vorbestimmten Zustand des
Sensors einstellende Resonanzfrequenz liegt.

Dieser vorbestimmte Zustand kann vorzugsweise der ausgetauchte Zustand des Sensors sein,
aber statt dessen auch bei einer anderen Wahl
des Wobbelbereichs der eingetauchte Zustand.
Dadurch können große Änderungen der Umgebungstemperatur, wie sie beispielsweise bei Kraftfahrzeugen auftreten, die Signalbildung nicht verfälschen. Beispielsweise ist es mit dieser Einrichtung möglich, den Füllstand innerhalb eines
Temperaturbereichs von —40° bis + 150 °C zuverlässig zu erfassen. Der Frequenzbereich bzw.
Wobbelbereich, auf den der Wobbelgenerator
eingestellt ist, wird nur dadurch begrenzt, daß die
Resonanzfrequenz des piezoelektrischen
Schwingers im ausgetauchten Zustand bei der
höchstzulässigen Temperatur nicht tiefer liegen
darf als die Frequenz des Schwingers im eingetauchten Zustand für die niedrigst zugelassene
Temperatur. Mit anderen Worten, die Bereiche
möglicher Resonanzfrequenzen innerhalb des
zugelassenen Temperaturbereichs dürfen sich
für den eingetauchten und für den ausgetauchten
Zustand nicht überlappen.

Ein besonderer Vorteil der erfindungsgemäßen
Einrichtung besteht also darin, daß ohne störenden Temperatureinfluß die von dem Sensor
abgegebenen elektrischen Signale für eingetauchten und ausgetauchten Zustand zuverlässig
unterschieden werden können, und daß dabei
auch störende Einflüsse von Betriebsspannungsschwankungen, Schwinger-Toleranzen und anderen Ungenauigkeiten beseitigt sind.

Zweckmäßig ist den Mitteln zur Auswertung der
Frequenz und Feststellung des Schwingens des
piezoelektrischen Schwingers mit der Resonanzfrequenz ein Speicher nachgeschaltet, der das
Ausgangssignal der Mittel so lange speichert, wie
der Wobbelgenerator zum Durchfahren des
Wobbelbereichs benötigt. Damit wird fortlaufend
der eingetauchte oder ausgetauchte Zustand des
Sensors angezeigt, auch dann, wenn die Resonanzfrequenz des piezoelektrischen Schwingers
während eines Wobbelzyklus nur kurzfristig
durchlaufen wird.

Die Erfindung wird im folgenden anhand einer
Zeichnung mit zwei Figuren erläuter. Es zeigt :

Figur 1  ein vereinfachtes Blockschaltbild der
Einrichtung und

Figur 2  die Phasenlagen in Abhängigkeit von
der Frequenz der Schwingung des piezoelektrischen Schwingers für verschiedene Temperaturen und Zustände des Sensors (eingetaucht oder
ausgetaucht).

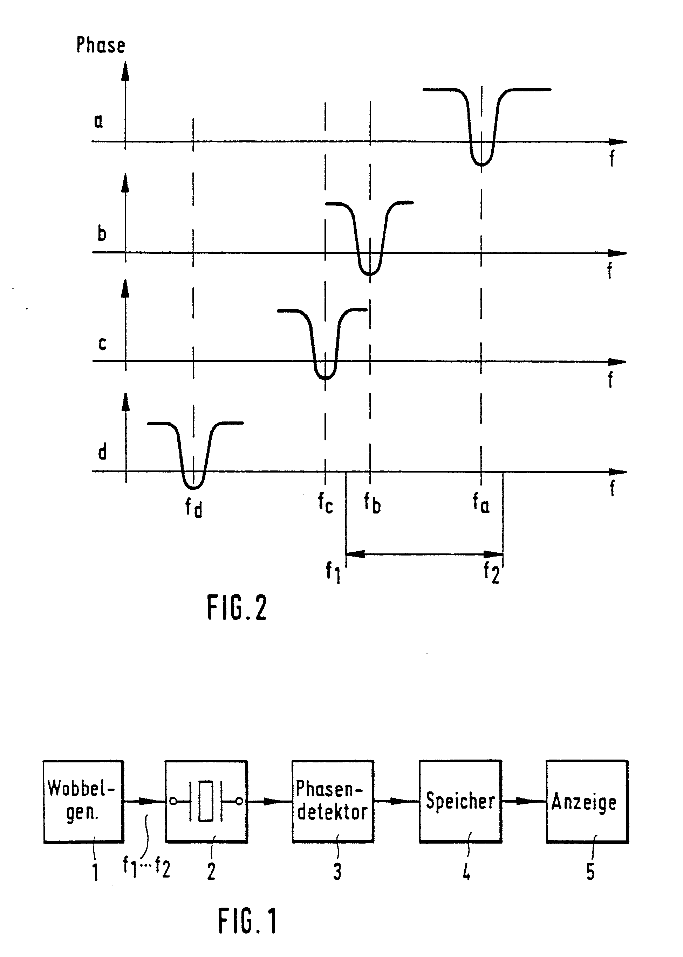

In Figur 1  ist mit 1 ein Wobbelgenerator bezeichnet, der in je einem Zyklus den Frequenzbereich $f_1 — f_2$ durchläuft. Das elektrische Signal
mit diesen Frequenzen beaufschlagt ein piezoelektrischer Schwinger 2.

Der piezoelektrische Schwinger 2 ist hier also
nicht frequenzbestimmender Bestandteil eines
Oszillators, sondern wird von einem mit ihm nicht rückgekoppelten Wobbelgenerator innerhalb eines bestimmten Frequenzbereiches angeregt.

In einem als Empfänger an den piezoelektrischen Schwinger 2 angeschlossenen Phasendetektor 3 wird die Stromspannungs-Phasenverschiebung in dem piezoelektrischen Schwinger 2 erfaßt und ausgewertet. Der Phasendetektor beinhaltet eine binäre Schaltung, die bei einer positiven Phasenverschiebung ein vorbestimmtes digitales Signal, z. B. High, abgibt und im Falle einer negativen Phasenverschiebung ein anderes vorbestimmtes binäres Signal, beispielsweise Low.

Diese binären Signale werden zumindest während eines Wobbelzyklus in einem Speicher 4 gespeichert, um für eine nachgeschaltete Anzeige 5 kontinuierlich zur Verfügung zu stehen.

In Figur 2 sind vie Kurvenzüge dargestellt, die mit a, b, c, d bezeichnet sind und die Abhängigkeit der Stromspannungsphasenlage an dem piezoelektrischen Schwinger 2 in Abhängigkeit von der Frequenz zeigen. Der größere positive Phasenteil (Strom voreilend) oberhalb der Frequenzachse ist dabei zur Vereinfachung der Darstellung entfallen ; vielmehr ist die Phasenlage nur in dem Bereich um die, jeweiligen Resonanzfrequenzen des piezoelektrischen Bauteils $f_a$, $f_b$, $f_c$ und $f_d$ gezeigt.

Im einzelnen stellt die Phasenbeziehung zur Frequenz in der Darstellung a dar, daß hier eine verhältnismäßig hohe Resonanzfrequenz $f_a$ bei einer niedrigen Temperatur im ausgetauchten Zustand erreicht wird. Mit steigender Temperatur wird die Resonanzfrequenz niedriger, bei 150 °C liegt sie beim Wert $f_b$ Noch niedriger in dem gewählten Temperaturbereich ist enstprechend dem Verlauf c die Resonanzfrequenz $f_c$ bei — 40 °C im eingetauchten Zustand. Schließlich liegt die Resonanzfrequenz $f_d$ entsprechend dem Kurvenzug d bei einer hohen Temperatur von 150 °C im eingetauchten Zustand am niedrigsten.

Es ist aus der Darstellung in Figur 2 ersichtlich, daß die Resonanzfrequenzen sowohl im eingetauchten als auch im ausgetauchten Zustand des Sensors bzw. des piezoeletrischen Schwingers temperaturabhängig stark differieren.

Der Wobbelbereich, auf den der Wobbelgenerator 1 eingestellt ist, liegt zwischen den Frequenzen $f_1$ und $f_2$, die ebenfalls in Figur 2 eingezeichnet sind. Der Wobbelbereich ist dabei größer als der Bereich möglicher Resonanzfrequenzen des piezoelektrischen Schwingers im austauchten Zustand und in dem vorgesehenen Temperaturbereich, in dem die Einrichtung einwandfrei arbeiten soll. Der Wobbelbereich überlappt sich also nicht mit dem Bereich möglicher Resonanzfrequenzen des piezoelektrischen Schwingers im eingetauchten Zustand. Statt der Dimensionierung des Wobbelbereichs, wie oben dargestellt, ist es aber auch möglich, den Wobbelbereich so zu verlegen, daß er die Resonanzfrequenzen in dem gesamten Bereich möglicher Temperaturen für den eingetauchten Zustand des Sensors umfaßt.

In jedem Falle wird bei jedem Zyklus, den der Wobbelgenerator durchläuft, festgestellt, ob die Resonanzfrequenz des piezoelektrischen Schwingers einmal erreicht wird oder nicht. Beim Erreichen eines solchen Resonanzfalles wird dabei mit dem Phasendetektor 3 festgestellt, daß die Phasenlage negativ wird.

Es ist aber auch denkbar, auf andere bekannte Kriterien zur Ermittlung der Resonanz des piezoelektrischen Schwingers unter Beibehaltung des Prinzips zurückzugreifen, bei dem der piezoelektrische Schwinger von einer Oszillatorschaltung in einem vorbestimmten Frequenzvereich angesteuert wird, ohne selbst die Frequenz zu beeinflussen.

**Patentansprüche**

1. Einrichtung zur Meldung des Füllstandes an dem Ort eines Sensors, der einen piezoelektrischen Schwinger (2) umfaßt, mit Mitteln (1), durch die der Schwinger (2) in Schwingung versetzbar ist mit einer Frequenz, die im Bereich des vom Füllgut bedeckten bzw. des vom Füllgut unbedeckten Sensors eine Resonanzfrequenz des Schwingers (2) ist, sowie mit Mitteln (3) zur Auswertung der Frequenz, mit der der Schwinger (2) schwingt und Mitteln (3) zur Feststellung des Schwingens des Schwingers (2) in Resonanz, z. B. einem Diskriminator, dadurch gekennzeichnet, daß der Schwinger (2) mit einer innerhalb eines vorbestimmten intervallartig durchlaufenen Frequenzbereichs liegenden Frequenz angeregt ist und daß die Mittel (3) zur Auswertung der Frequenz und Feststellung des Schwingens des Schwingers (2) in Resonanz zur Feststellung einer Resonanzfrequenz innerhalb des durchlaufenen Frequenzbereiches vorgesehen sind.

2. Einrichtung nach Anspruch 1, dadurch gekennzeichnet, daß das Mittel zur Feststellung des Schwingens des Schwingers (2) mit der Resonanzfrequenz ein Phasendetektor (3) ist.

3. Einrichtung nach Anspruch 1 oder 2, dadurch gekennzeichnet, daß das Mittel (1), durch das der Schwinger (2) in Schwingung versetzbar ist, ein den Schwinger (2) beaufschlagender Wobbelgenerator (1) ist, der auf einen Wobbelbereich eingestellt ist, in dem nur die sich in einem vorgegebenen Umgebungstemperaturbereich des Sensors und in dem einen vorbestimmten Zustand des Sensors einstellende Resonanzfrequenz liegt.

4. Einrichtung nach Anspruch 3, dadurch gekennzeichnet, daß der Wobbelgenerator (1) auf einen Wobbelbereich eingestellt ist, in dem bei einem vorgegebenen Umgebungstemperaturbereich des Sensors nur die Resonanzfrequenz in dem ausgetauchten Zustand des Sensors liegt.

5. Einrichtung nach Anspruch 3, dadurch gekennzeichnet, daß der Wobbelgenerator (1) auf einen Wobbelbereich eingestellt ist, in dem bei einem vorgegebenen Umgebungstemperaturbereich des Sensors nur die Resonanzfrequenz in dem eingetauchten Zustand des Sensors liegt.

6. Einrichtung nach Anspruch 1, dadurch gekennzeichnet, daß den Mitteln (3) zur Auswertung der Frequenz und Feststellung des Schwingens des Schwingers (2) mit der Resonanzfrequenz ein Speicher (4) nachgeschaltet ist, der das Ausgangssignal der Mittel (3) wenigstens so lange speichert, wie der Wobbelgenerator (1) zum Durchfahren des eingestellten Wobbelbereiches benötigt.

## Claims

1. Device for indicating the filling level at the site of a sensor, which sensor comprises a piezoelectric resonator (2), with means (1) whereby the resonator (2) can be made to oscillate at a frequency which in the region where the sensor is covered with filling or not covered with filling respectively is a resonance frequency of the resonator (2), also with means (3) for evaluating the frequency at which the resonator (2) oscillates and means (3) for detecting the oscillation of the resonator (2) in resonance e. g. a discriminator, characterised in that the resonator (2) is excited with a frequency situated within a predetermined frequency range run through at intervals, and that the means (3) for evaluating the frequency and detecting the oscillation of the resonator (2) in resonance are arranged for detecting a resonance frequency within the frequency range passed through.

2. Device according to claim 1, characterised in that the means for detecting the oscillation of the resonator (2) at resonance frequency is a phase detector (3).

3. Device according to claim 1 or 2, characterised in that the means (1) whereby the resonator (2) can be made to oscillate is a wobble generator (1) which acts on the resonator (2) and which is set to a wobble range in which only the resonance frequency which is brought about in a predetermined ambient temperature range of the sensor and in the one predetermined state of the sensor is situated.

4. Device according to claim 3, characterised in that the wobble generator (1) is set to a wobble range in which in a given ambient temperature range of the sensor only the resonance frequency in the emerged state of the sensor is situated.

5. Device according to claim 3, characterised in that the wobble generator (1) is set to a wobble range in which in a given ambient temperature range of the sensor only the resonance frequency in the immersed state of the sensor is situated.

6. Device according to claim 1, characterised in that there is connected to the output side of the means (3) for evaluating the frequency and detecting the oscillation of the resonator (2) at the resonance frequency a store (4) which stores the output signal of the emans (3) at least as long as the wobble generator (1) requires to pass through the set wobble range.

## Revendications

1. Dispositif destiné à indiquer le niveau d'un fluide à l'emplacement d'un capteur qui contient un vibreur piézoélectrique (2), ce dispositif comprenant un circuit (1) grâce auquel ce vibreur (2) peut être mis en vibration à une fréquence qui est une fréquence de résonance dudit vibreur (2) à proximité du capteur recouvert ou non par le fluide de remplissage, ainsi qu'un circuit (3) de détection de la fréquence à laquelle le vibreur vibre et un moyen (3) pour constater la vibration en résonance dudit vibreur, un discriminateur par exemple, dispositif caractérisé en ce que le vibreur (2) est excité par une fréquence comprise dans une plage prédéterminée, parcourue par intervalles et le circuit (3) destiné à détecter la fréquence et à constater la vibration en résonance du vibreur (2) est conçu de manière à déterminer une fréquence de résonance comprise dans la plage de fréquences parcourue.

2. Dispositif selon la revendication 1, caractérisé en ce que le circuit destiné à constater la vibration du vibreur (2) à la fréquence de résonance est un détecteur (3) de phases.

3. Dispositif selon la revendication 1 ou la revendication 2, caractérisé en ce que le circuit (1) grâce auquel le vibreur (2) peut être mis en vibration est un générateur de balayage (1), qui agit sur ce vibreur (2) et qui est réglé sur une plage de balayage dans laquelle se trouve uniquement la fréquence de résonance s'établissant dans une plage prédéterminée de températures ambiantes du capteur et dans l'un des états prédéterminés de ce capteur.

4. Dispositif selon la revendication 3, caractérisé en ce que le générateur de balayage (1) est réglé sur une plage de balayage dans laquelle ne se trouve que la fréquence de résonance du capteur quand il n'est pas immergé, dans une plage prédéterminée de températures ambiantes de ce capteur.

5. Dispositif selon la revendication 3, caractérisé en ce que le générateur de balayage (1) est réglé sur une plage de balayage dans laquelle ne se trouve que la fréquence de résonance du capteur, quand celui-ci est immergé, dans une plage prédéterminée de températures ambiantes de ce capteur.

6. Dispositif selon la revendication 1, caractérisé en ce que, derrière le circuit (3) destiné à détecter la fréquence et à constater la vibration du vibreur (2) à la fréquence de résonance, il est monté une mémoire (4), qui conserve le signal de sortie de ce circuit (3) au moins aussi longtemps que cela est nécessaire pour que le générateur de balayage (1) parcourt la plage de balayage déterminée.

Phase

FIG.2

FIG.1

1